# EUROPEAN PATENT APPLICATION

(11) **EP 1 878 544 A1**
(43) Date of publication of application: **16.01.2008**
(21) Application number: 06405294.7
(22) Date of filing: 11.07.2006
(51) Int. Cl.: B25J 17/02

(54) **Parallel positioning mechanism with articulated upper arm**

(71) Applicant: CSEM Centre Suisse d'Electronique et de Microtechnique SA, 2007 Neuchâtel (CH)
(72) Inventor: Perroud, Sébastien, 3008 Bern (CH)
(74) Representative: Frei Patent Attorneys

(57) **Abstract**

A parallel positioning mechanism comprises a base (1), the platform (4) and three arm assemblies (5, 6, 7, 8, 9) linking the platform (4) to the base (1), each of the arm assemblies (5, 6, 7, 8, 9) comprising a primary actuator (5) that is attached to the base (1) and moves an upper arm portion (6, 7, 8), and a lower arm portion comprising a parallel linkage (9) linking a distal end of the upper arm portion (6, 7, 8) with the platform (4).

At least one of the arm assemblies (5, 6, 7, 8, 9) the upper arm portion (6, 7, 8) is articulated in that it comprises a first member (6) actuated by the corresponding primary actuator (5), and a second member (8) to which the parallel linkage is attached, and which second member (8) is rotatable with respect to the first member (6) around a secondary axis (2), allowing for an additional degree of freedom of the platform (4).

## Description

### FIELD OF THE INVENTION

The invention relates to the field of positioning mechanisms, in particular to a parallel positioning mechanism as described in the preamble of claim 1.

### BACKGROUND OF THE INVENTION

Miniaturization of products is an ongoing trend worldwide thanks to the advances in the fields of micro- and nanotechnology. Thus, basic components become smaller and smaller. The assembly of small components requires new robots of small size and with both high-speed motion capability and high precision. In order to get high-speed motion capability, the moving mass has to be reduced to a minimum. This can be achieved by using parallel kinematics.

US 4,976,582 discloses the so-called "Delta"-robot parallel kinematic structure: The translational position of a platform is controlled by three parallel arms that join the platform to a base. With an end effector attached to the platform, this allows for very fast pick and place operations, but is limited to three degrees of freedom.

US 5,333,514 describes a parallel linkage mechanism also having three parallel arms but providing for six degrees of freedom of the platform. Each of the arm assemblies comprises a pair of motors mounted on the base and facing each other, and two primary arms in a parallel kinematic arrangement that are connected each to one of the motors and at their bottom ends are connected to a pair of secondary arms that are connected to each other by an articulation joint. At the bottom end of the secondary arms is another articulation joint which joins them to the platform.

### DESCRIPTION OF THE INVENTION

It is an object of the invention to create a parallel positioning mechanism of the type mentioned initially, which is suited for high-precision and high-speed tasks. These objects are achieved by a parallel positioning mechanism according to claim 1.

The parallel positioning mechanism provides at least four degrees of freedom of movement for a platform (which may also be called a bracket member). The mechanism comprises a base, the platform and at least three arm assemblies linking the platform to the base, each of the arm assemblies comprising a primary actuator that is rigidly attached to the base and moves an upper arm portion with respect to a primary axis, and a lower arm portion comprising a parallel linkage linking a distal end of the upper arm portion with the platform. The proximal end of the upper arm portion is near the primary axis. In at least one of the arm assemblies the upper arm portion is articulated in that it comprises, at a proximal end, a first member actuated by the corresponding primary actuator, and, at the distal end, a second member to which the parallel linkage is attached, and which second member is rotatable with respect to the first member around a secondary axis.

This allows for at least one additional degree of freedom of the platform in addition to the three degrees of freedom corresponding to the movement of the primary actuators. Thus, the basic structure of the inventive mechanism corresponds to that of the delta robot initially described, but with one or more additional degrees of freedom introduced by the movability around the one or more secondary axes.

In a preferred embodiment of the invention, in all three arm assemblies the upper arm portion is articulated, that is, the upper arm portion comprises the second member movable with respect to the first member.

In a further preferred embodiment of the invention, in one or more of the arm assemblies that are articulated, the primary actuator rotates the upper arm portion around the primary axis, and the secondary axis is at an angle to the primary axis, that is, it is not parallel. Preferably, the angle between the primary axis and secondary axis is larger than forty degrees and preferably at least approximately ninety degrees (as seen in a projection on to a plane that is parallel to both axes). In a further preferred embodiment of the invention, in one or more of the arm assemblies that are articulated, the primary axis and secondary axis intersect one another.

In an alternative preferred embodiment of the invention, in one or more of the arm assemblies that are articulated, the primary actuator slides the upper arm portion in a translational movement along the primary axis. In this embodiment, the primary axis and the secondary axis preferably coincide.

In a further preferred embodiment of the invention, in at least one of the arm assemblies, the rotation of the second member is not driven but is passively controlled by at least one of a spring and a damping mechanism.

In a further preferred embodiment of the invention, in at least one of the arm assemblies, a secondary actuator drives the rotation of the second member around the secondary axis. The secondary actuator may be part of the upper arm portion and be moved by the primary actuator together with the first member. Preferably, the secondary actuator then is arranged in the upper arm portion between the proximal and distal end of the upper arm portion.

In a further preferred embodiment of the invention, for the case of the primary actuator being a rotary actuator, the secondary actuator is arranged to at least approximately minimise the rotational inertia of the upper arm portion around the primary axis. This reduces the load on the primary actuator.

In a further preferred embodiment of the invention, the secondary actuator is attached to the base and drives the movement of the second member by means of an articulated movement transmission means, and preferably with a shaft transmitting the movement of the articulated movement transmission means to the second member. Preferably, the articulated movement transmission means is a linkage comprising a universal joint. Alternatively, a flexible hose or the like is used instead of the universal joint.

In a further preferred embodiment of the invention, the secondary actuator is attached to the base and drives the movement of the second member by means of a gear mechanism. Preferably, this mechanism comprises a pair of meshing conical gears.

The parallel positioning mechanism is particularly suited for high precision and high-speed assembly and pick and place applications for e.g. watch making, micromechanical devices, microelectronics etc.

Further preferred embodiments are evident from the dependent patent claims.

### BRIEF DESCRIPTION OF THE DRAWINGS

The subject matter of the invention will be explained in more detail in the following text with reference to preferred exemplary embodiments, which are illustrated in the attached drawings, in which:
- Figure 1: shows a view of a first embodiment of the invention;
- Figure 2: shows a view of an arm assembly of the first embodiment;
- Figure 3: shows a sectional view of an upper arm portion of the first embodiment;
- Figure 4: shows a view of a second embodiment of the invention;
- Figure 5: shows a sectional view of an upper arm portion of the second embodiment;
- Figure 6: shows a view of a third embodiment of the invention; and
- Figure 7: shows a sectional view of an upper arm portion of the third embodiment.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

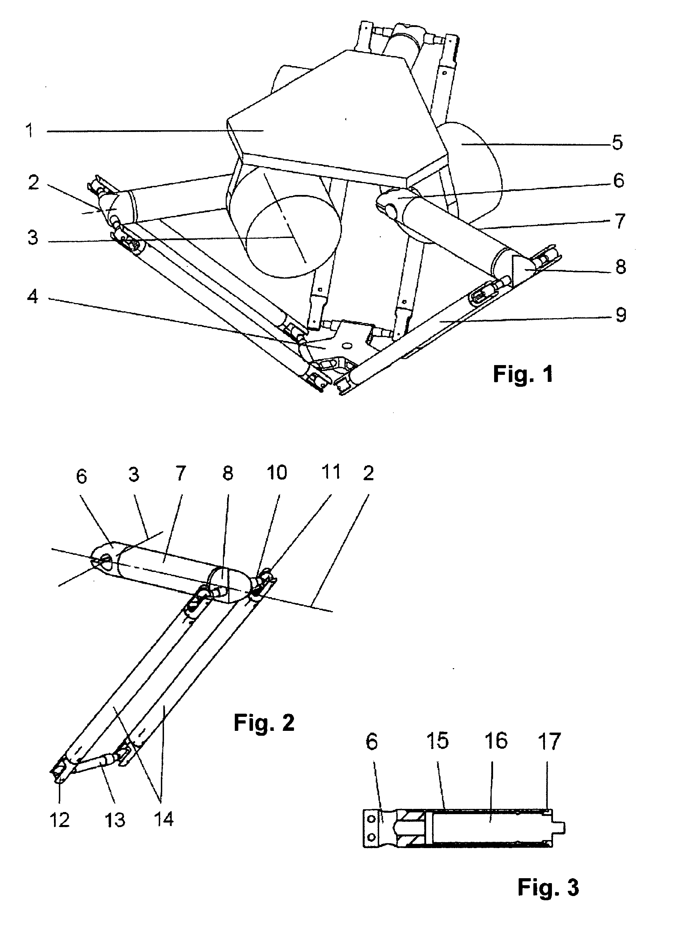

Figure 1 shows a view of a first embodiment of the invention. The parallel positioning mechanism according to this embodiment comprises three arm assemblies 5, 6, 7, 8, 9 arranged at regular angular intervals around a centre point of a base 1. These arm assemblies 5, 6, 7, 8, 9 link the base 1 to a platform 4 and together define and control the pose (position and orientation) of the platform 4. An arm assembly comprises a primary actuator 5 driving the position of a first member 6 around a primary axis 3. A single arm assembly 5, 6, 7, 8, 9 (without the primary actuator 5) is shown in Figure 2. The primary axis 3 lies at a proximal end of an upper arm portion 6, 7, 8. A second member 8 lies at a distal end of the upper arm portion 6, 7, 8 and is rotatable, with respect to the first member 6, around a secondary axis 2.

The second member 8 is coupled to the platform 4 by means of a parallel linkage 9. The parallel linkage 9 comprises an upper parallelogram side 10, a pair of upper parallelogram joints 11, a pair of linking bars 14, a pair of lower parallelogram joints 12 and a lower parallelogram side 13. The upper parallelogram joints 11 join a bar constituting an upper parallelogram side 10 to the ends of a pair of linking bars 14. Said upper parallelogram side 10 is rigidly connected to and moves with the second member 8. The other ends of the linking bars 14 are joined to a bar constituting a lower parallelogram side 13 and being affixed to the platform 4. The parallel linkage 9 constrains the movement of the lower parallelogram side 13 such that it remains parallel to the upper parallelogram side 10 and at a constant distance. The joints at the ends of the linking bars 14 preferably are of the ball and socket type or are universal (or cardan) joints. The total number of degrees of freedom in a parallel linkage 9 over all its joints is at least ten.

In a preferred embodiment of the invention, a secondary actuator 7 drives the second member 8. The position and movement of the primary actuators 5 and the secondary actuators 7 are controlled by a control system typically comprising sensors for measuring e.g. the actuator position, one or more control loops, and power electronics driving the actuators.

Figure 3 shows a sectional view of an upper arm portion of the first embodiment. The first member 6 comprises a bore for coupling to a shaft of the primary actuator 5. An outer cylinder 15 running along the length of the upper arm surrounds a rotary drive 16 and is attached to the rotary drive 16 e.g. by a drive attachment section 17. The second member 8 (not drawn) is attached to the shaft of the rotary drive 16, shown as a protrusion at the rotary drive's 16 right side. The movement of the axle around the secondary axis 2, which is coincident with the axis of the outer cylinder 15, is transferred via the second member 8 and the parallel linkage 9 to the platform 4.

The (translatory) position of the platform 4 is thus controlled by the primary actuators 5, and the orientation by the secondary actuators 7. The platform 4 typically carries an end effector such as a gripper, suction gripper, spray nozzle etc.

In an alternative preferred embodiment of the invention, the upper arm does not comprise a drive 16, but a spring and/or a damping mechanism. Said mechanism is arranged to passively keep the second member 8 in a central position, but allowing it to be resiliently moved away from the central position. This allows the platform 4 to be positioned in three translational dimensions while being free to rotate within the limits imposed by the geometry of the arm mechanisms and the spring/damping mechanism. In this manner, orientation errors, e.g. in assembly operations, may be compensated for by passive compliance.

In a preferred embodiment of the invention, the three arms are identical in construction and comprise secondary actuators 7. However, in other embodiments, one or more of the arms are driven, and/or one or more arms are passively compliant, and/or one or more arms do not allow movement around the secondary axis 2.

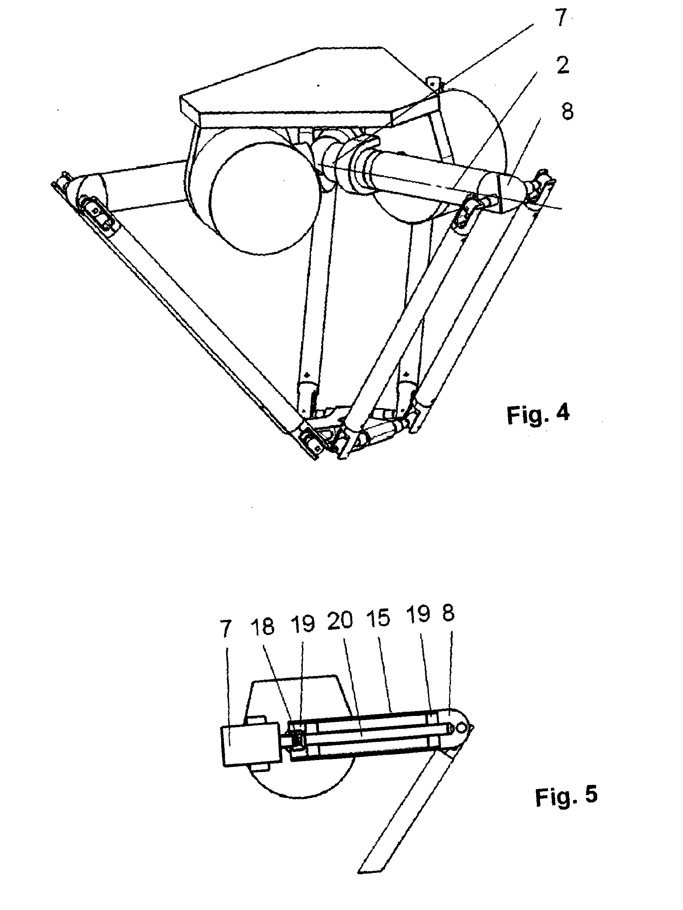

Figure 4 shows a view of a second embodiment of the invention, in which the secondary actuators 7 are arranged stationary and attached to the base 1. Figure 5 shows a sectional view of an upper arm portion of this embodiment. In each arm, the secondary actuator 7 is linked to a shaft 20 by means of a cardan joint 18. The centre of the cardan joint 18 is located on the primary axis 3. The shaft 20 extends along the length of the upper arm and is supported by bearings 19. The distal end of the shaft 20 is attached to the second member 8, such that the motion of the secondary actuator 7 is transferred to the second member 8.

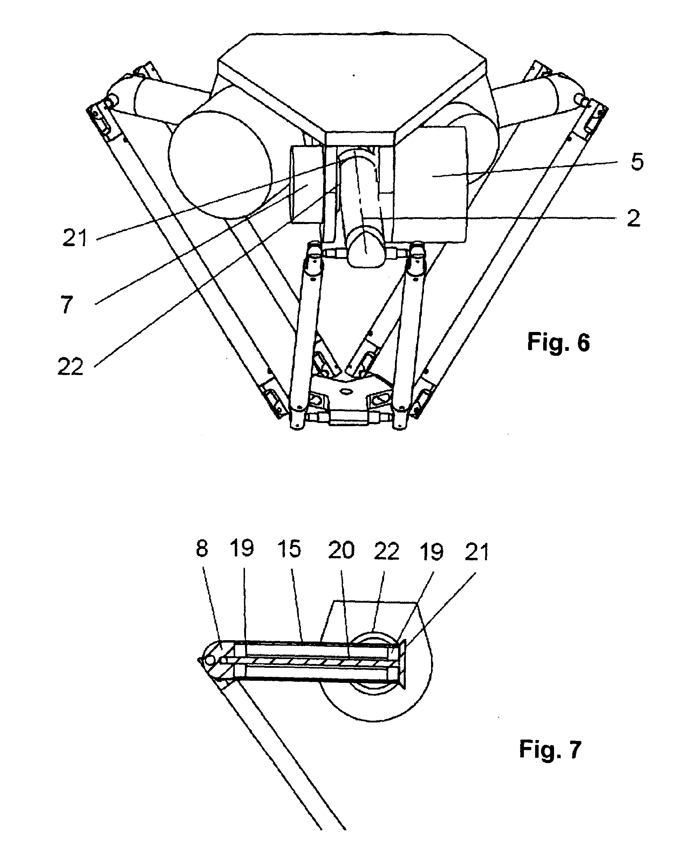

Figure 6 shows a view of a third embodiment of the invention, in which the secondary actuators 7 are also stationary, but are coupled to the shaft 20 by means of a gear mechanism. Figure 7 shows a sectional view of an upper arm portion of the third embodiment. The secondary actuator 7 is arranged with its drive axis being coincident with the primary axis 3 of the primary actuator 5. A first conical gearwheel 21 attached to and driving the shaft 20 meshes with a second conical gearwheel 22 which is attached to and driven by the secondary actuator 7. The first gearwheel 21, the shaft 20 and the second member 8 thus are rigidly connected and pivot around the secondary axis 2. The axis of rotation of the second gearwheel 22 is coincident with the primary axis 3. The conical gearing may also be realized with friction elements instead of toothed wheels.

The control system synchronises the movement of the secondary actuator 7 to the movement of the primary actuator 5: when no movement around the secondary axis 2 is required, the secondary actuator 7 moves in step with the primary actuator 5, such that the rotation of the first gearwheel 21 with respect to the first member 6 is zero. When a rotation of the second member 8 is required, the difference in position of the primary actuator 5 and secondary actuator 7 is controlled according to said difference.

In a further preferred embodiment of the invention, the primary actuator 5 is not rotary but linear, as in Fig. 5 of the initially cited US 4,976,582, which figure is herewith incorporated by reference. According to the present invention, the members (denoted in the cited patent by reference number 24) moving on straight guides each comprise a distal end with the second member 8 that is rotatable around the axis of the linear movement and is connected to a parallel linkage.

In this case of the primary actuator being of translational type, in a preferred embodiment of the invention, part of the shaft 20 is of prismatic shape, having the cross section of a gearwheel meshing with a stationary gearwheel of the secondary drive 7 and sliding along said stationary gearwheel.

**LIST OF DESIGNATIONS**

| | | | |
|---|---|---|---|
| 1 | base | 12 | lower parallelogram joint |
| 2 | secondary axis | 13 | lower parallelogram side |
| 3 | primary axis | 14 | linking bar |
| 4 | platform | 15 | outer cylinder |
| 5 | primary actuator | 16 | rotary drive |
| 6 | first member | 17 | drive attachment |
| 7 | secondary actuator | 18 | cardan joint |
| 8 | second member | 19 | bearing |
| 9 | parallel linkage | 20 | shaft |
| 10 | upper parallelogram side | 21 | first gearwheel |
| 11 | upper parallelogram joint | 22 | second gearwheel |

## Claims

1. A parallel positioning mechanism with at least four degrees of freedom, comprising a base (1), a platform (4) and at least three arm assemblies (5, 6, 7, 8, 9) linking the platform (4) to the base (1), each of the arm assemblies (5, 6, 7, 8, 9) comprising a primary actuator (5) that is attached to the base (1) and moves an upper arm portion (6, 7, 8) with respect to a primary axis (3), and a lower arm portion comprising a parallel linkage (9) linking a distal end of the upper arm portion (6, 7, 8) with the platform (4),
**characterised in that** in at least one of the arm assemblies (5, 6, 7, 8, 9) the upper arm portion (6, 7, 8) is articulated **in that** it comprises, at a proximal end, a first member (6) actuated by the corresponding primary actuator (5), and, at the distal end, a second member (8) to which the parallel linkage is attached, and which second member (8) is rotatable with respect to the first member (6) around a secondary axis (2).

2. The parallel positioning mechanism of claim 1, wherein in all three arm assemblies (5, 6, 7, 8, 9) the upper arm portion (6, 7, 8) is articulated.

3. The parallel positioning mechanism of claim 1 or claim 2, wherein, in one or more of the arm assemblies (5, 6, 7, 8, 9) that are articulated, the primary actuator (5) rotates the upper arm portion (6, 7, 8) around the primary axis (3), and the secondary axis (2) is at an angle to the primary axis (3).

4. The parallel positioning mechanism of claim 3, wherein the angle between the primary axis (3) and secondary axis (2) is larger than forty degrees and preferably at least approximately ninety degrees.

5. The parallel positioning mechanism of claim 4, wherein, in one or more of the arm assemblies (5, 6, 7, 8, 9) that are articulated, the primary axis (3) and secondary axis (2) intersect one another.

6. The parallel positioning mechanism of claim 1 or claim 2, wherein, in one or more of the arm assemblies (5, 6, 7, 8, 9) that are articulated, the primary actuator (5) slides the upper arm portion (6, 7, 8) in a translational movement along the primary axis (3) and wherein preferably the primary axis (3) and the secondary axis (2) coincide.

7. The parallel positioning mechanism of one of the preceding claims, wherein, in at least one of the arm assemblies (5, 6, 7, 8, 9), the rotation of the second member (8) involves at least one of a spring and a damping mechanism.

8. The parallel positioning mechanism of one of the preceding claims, wherein, in at least one of the arm assemblies (5, 6, 7, 8, 9), a secondary actuator (7) drives the rotation of the second member (8) around the secondary axis (2).

9. The parallel positioning mechanism of claim 8, wherein the secondary actuator (7) is part of the upper arm portion (6, 7, 8) and is moved by the primary actuator (5) together with the first member (6).

10. The parallel positioning mechanism of claim 9, wherein the secondary actuator (7) is arranged in the upper arm portion (6, 7, 8) between the proximal and distal end of the upper arm portion (6, 7, 8).

11. The parallel positioning mechanism of claim 10 dependent on at least one of claims (3) to (5), wherein the secondary actuator (7) is arranged to at least approximately minimise the rotational inertia of the upper arm portion (6, 7, 8) around the primary axis (3).

12. The parallel positioning mechanism of claim 8, wherein the secondary actuator (7) is attached to the base (1) and drives the movement of the second member (8) by means of an articulated movement transmission means, and preferably with a shaft (20) transmitting the movement of the articulated movement transmission means to the second member (8).

13. The parallel positioning mechanism of claim 12, wherein the articulated movement transmission means is a linkage comprising a universal joint.

14. The parallel positioning mechanism of claim 8, wherein the secondary actuator (7) is attached to the base (1) and drives the movement of the second member (8) by means of a gear mechanism (21, 22).

15. The parallel positioning mechanism of claim 14, wherein the gearing mechanism comprises a pair of meshing conical gearwheels (21, 22), with a first gearwheel (21) coupled to the second member (8) and pivoting in the upper arm portion (6, 7, 8), and a second gearwheel (22) attached to the secondary actuator (7) being arranged to rotate around the primary axis (3) of the corresponding primary actuator (5).

16. The parallel positioning mechanism of claim 15, wherein the first gearwheel (21), the shaft (20) and the second member (8) are rigidly connected and pivot around the secondary axis (2).

17. The parallel positioning mechanism of one of the preceding claims, wherein the three arm assemblies (5, 6, 7, 8, 9) are identical in construction and are arranged at regular angular intervals around the base (1).
